# EUROPEAN PATENT SPECIFICATION

(11) **EP 3 136 506 B1**
(45) Date of publication and mention of the grant of the patent: **05.06.2019**
(21) Application number: 15197643.8
(22) Date of filing: 02.12.2015
(51) Int. Cl.: H01Q 5/364, H01Q 9/42, H01Q 1/24, H01Q 1/38, H01Q 7/00

(54) **COMMUNICATION DEVICE**
KOMMUNIKATIONSVORRICHTUNG
DISPOSITIF DE COMMUNICATION

(30) Priority: 26.08.2015 TW 104127828
(43) Date of publication of application: 01.03.2017
(73) Proprietor: Acer Incorporated, New Taipei City 221 (TW)
(72) Inventor: CHANG, Kun-Sheng, ROC New Taipei City 221, (TW); HUANG, Shih-Ting, ROC New Taipei City 221, (TW); LIN, Ching-Chi, ROC New Taipei City 221, (TW)
(74) Representative: Haseltine Lake Kempner LLP

(56) References cited:
- US-A1- 2011 183 633
- US-A1- 2012 001 803
- US-A1- 2012 249 393
- US-A1- 2013 050 036
- US-A1- 2013 314 297

## Description

### BACKGROUND OF THE INVENTION

### FIELD OF THE INVENTION

The invention relates to a communication device, and more particularly to a communication device having a low-profile antenna element.

### DESCRIPTION OF RELATED ART

Recently, in addition to functional demands, communication devices also develop toward slimmer, smaller and light-weight designs. For instance, current communication devices adopt narrow-frame designs, so as to attract the attention of consumers. However, after incorporating the narrow-frame designs, there is less space in communication devices for antenna elements. In particular, in narrow-frame designs, the height of the antenna element in the Y-axis direction is considerably limited. Therefore, it has been an important issue to design low-profile antenna elements.

Background information can be found in US 2013/050036 A1, US 2012/0249393 A1, US 2013/0314297 A1, US 2012/0001803 A1 and US2011/0183633 A1.

### SUMMARY OF THE INVENTION

The invention is defined in the independent claim. The dependent claims define preferred embodiments. A communication device is provided, which reduces space occupied by a first radiation portion and a second radiation portion in the Y-axis direction so that an antenna element has a low-profile characteristic.

To make the above features and advantages of the present invention more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the invention.
FIG. 1 is a schematic diagram of a communication device according to an embodiment of the invention.
FIGs. 2 and 3 are respectively schematic diagrams for illustrating operation of the antenna element according to an embodiment of the invention.
FIGs. 4 and 5 are respectively schematic diagrams of the appearance of a communication device according to an embodiment of the invention.
FIG. 6 is a diagram of return loss of an antenna element in a notebook mode according to an embodiment of the invention.
FIG. 7 is a diagram of return loss of an antenna element in a tablet mode according to an embodiment of the invention.

### DESCRIPTION OF EMBODIMENTS

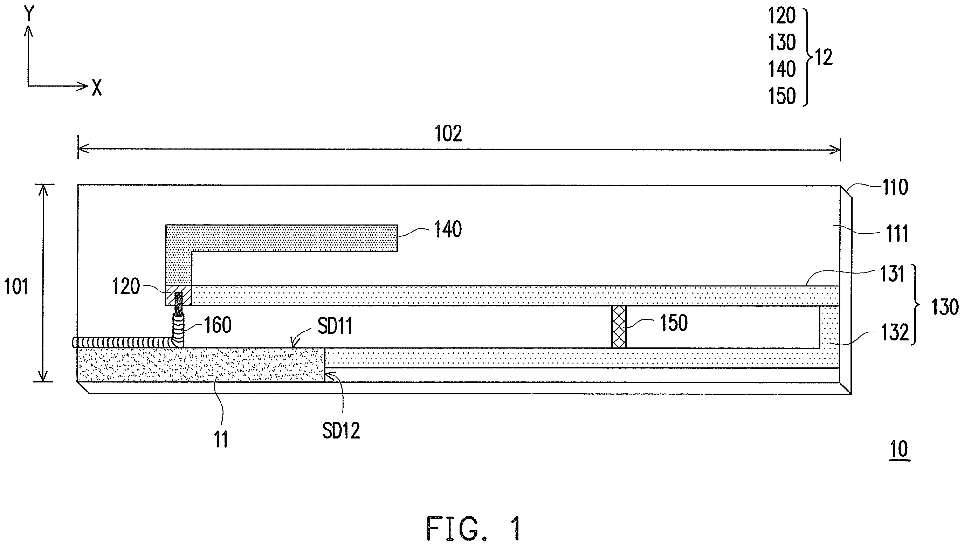

FIG. 1 is a schematic diagram of a communication device according to an embodiment of the invention. As shown in FIG. 1, a communication device 10 includes a ground plane 11, an antenna element 12 and a substrate 110. The ground plane 11 and the antenna element 12 are disposed on a surface 111 of the substrate 110, and the substrate 110 may be, for example, a printed circuit board. In other words, the antenna element 12 may be, for example, a planar antenna, and the antenna element 12 includes a feeding portion 120, a first radiation portion 130, a second radiation portion 140 and an adjusting portion 150.

The ground plane 11 includes a first edge SD11 and a second edge SD12 that are adjacent to each other. The feeding portion 120 is close to the first edge SD11 of the ground plane 11. The first radiation portion includes a first portion 131 and a second portion 132. A first end of the first portion 131 is electrically connected to the feeding portion 120. A first end of the second portion 132 is electrically connected to a second end of the first portion 131, and a second end of the second portion 132 is electrically connected to the second edge SD12 of the ground plane 11. The shape of the first portion 131 may be, for example, linear, and the shape of the second portion 132 may be, for example, inverted-L. Furthermore, the first portion 131 faces the second portion 132 and the first edge SD11 of the ground plane 11. The second portion 132 extends from the second edge SD12 of the ground plane 11. Thereby, the shape of the first radiation portion 130 is like an inverted U and has an opening towards a first direction (for example, -X-axis direction).

A first end of the second radiation portion 140 is electrically connected to the feeding portion 120, and a second end of the second radiation portion 140 is an open end. In addition, the second radiation portion 140 includes a bend, so that part of the second radiation portion 140 is parallel to the first portion 131 of the first radiation portion 130. Furthermore, the shape of the second radiation portion 140 may be, for example, an inverted L, and the second radiation portion 140 and the first portion 131 may form an opening towards a second direction (for example, X-axis direction). The adjusting portion 150 is electrically connected between the first portion 131 and the second portion 132, and the adjusting portion 150 is parallel to part of the second portion 132.

In operation, the feeding portion 120 and the first radiation portion 130 form a first resonant path, and the feeding portion 120 and the second radiation portion 140 form a second resonant path. In addition, the antenna element 12 receives a feeding signal from a transceiver (not shown) in the communication device 10 through the feeding portion 120. For instance, the feeding portion 120 may be electrically connected to the transceiver through a coaxial cable 160, wherein an inner conductor of the coaxial cable 160 is electrically connected to the feeding portion 120, and an outer conductor of the coaxial cable 160 is electrically connected to the ground plane 11.

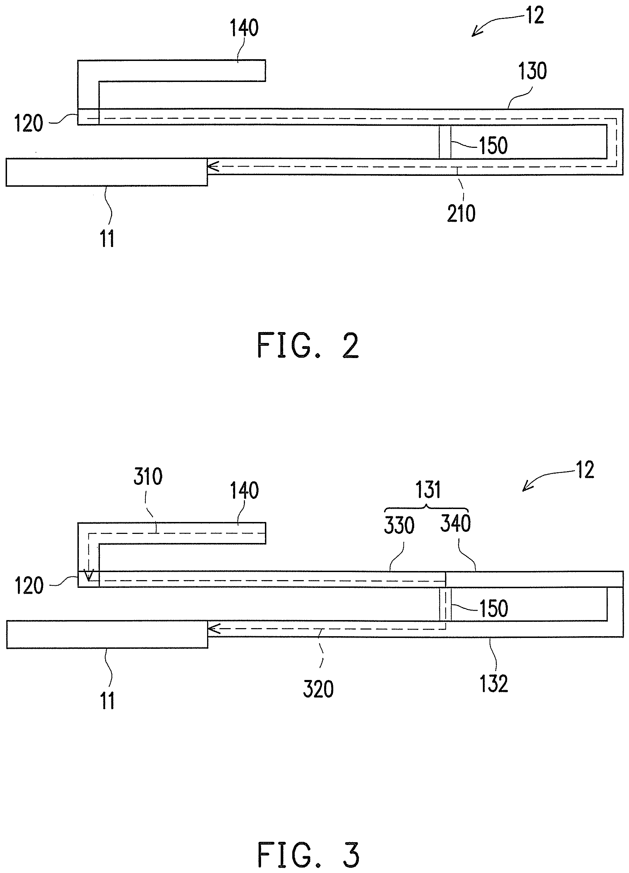

When excited by the feeding signal, the antenna element 12 generates two different resonant modes through the first resonant path and the second resonant path, so as to operate in the first band and the second band. For persons having ordinary skill in the art to understand more about the invention, FIGs. 2 and 3 are respectively schematic diagrams for illustrating operation of the antenna element according to an embodiment of the invention, and the operation of the antenna element is further described with reference to FIGs. 1 to 3.

As shown in FIG. 2, the feeding portion 120 and the first radiation portion 130 form a first resonant path 210. When excited by the feeding signal, the antenna element 12 generates the first resonant mode through the first resonant path 210, so as to operate in the first band (for example, a low-frequency band). It is worth noting that the first resonant path 210 has a loop structure. That is, the first radiation portion 130 has a loop antenna structure. In other words, the first resonant path 210 is 1/2 wavelength of the lowest frequency of the first band, and the antenna element 12 operating in the first band (for example, a low-frequency band) is less easily disturbed by external environments.

As shown in FIG. 3, the feeding portion 120 and the second radiation portion 140 form a second resonant path 310. When excited by the feeding signal, the antenna element 12 generates the second resonant mode through the second resonant path 310, so as to operate in the second band (for example, a high-frequency band). In addition, the second radiation portion 140 has a monopole antenna structure. That is, the second resonant path 310 is 1/4 wavelength of the lowest frequency of the second band. Furthermore, part of the first portion 131 and the adjusting portion 150 and part of the second portion 132 form a current-dividing path 320. That is, the adjusting portion 150 and part of the first radiation portion 130 form the current-dividing path 320. Thereby, the adjusting portion 150 and part of the first radiation portion 130 are equivalent to an inductive element. Thus, when the antenna element 12 operates in the second band, the current-dividing path 320 has an inductive effect, and the inductive effect is used for reducing a capacitive effect between the second radiation portion 140 and the ground plane 11.

In other words, the adjusting portion 150 and part of the first radiation portion 130 is used for adjusting the impedance of the antenna element 12 operating in the second band, so that the antenna element 12 has good impedance match in the second band. In addition, the inductive effect contributed by the current-dividing path 320 may be adjusted by changing the place where the adjusting portion 150 is disposed. For instance, as shown in FIG. 3, based on the place where the adjusting portion 150 is disposed, the first portion 131 may be divided into a first segment 330 and a second segment 340. The first segment 330 is electrically connected to the feeding portion 120, and the second segment 340 is electrically connected to the second portion 132. Preferably, the length of the first segment 330 is twice the length of the second segment 340.

It is worth mentioning that the ground plane 11 and the second portion 132 of the first radiation portion 130 are arranged in sequence along the X-axis direction, and the first portion 131 and second portion 132 of the first radiation portion 130 face each other. Thereby, the space occupied by the first radiation portion 130 in the Y-axis direction is effectively reduced, so that the height of the antenna element 12 in the Y-axis direction is reduced. In addition, since the impedance of the antenna element 12 operating in the second band may be adjusted with the current-dividing path, the antenna element 12 is still able to maintain good radiation characteristics when the second radiation portion 140 is nearby the ground plane 11. Thereby, the space occupied by the second radiation portion 140 in the Y-axis direction is effectively reduced, so that the height of the antenna element 12 in the Y-axis direction is further reduced.

For instance, the area occupied by the antenna element 12, the coaxial cable 160 and the ground plane 11 may be expressed by a height 101 and a width 102 in FIG. 1. That is, the height 101 in FIG. 1 includes a height of the antenna element 12 in the Y-axis direction. Preferably, the first band and the second band covered by the antenna element 12 may be, for example, 2.4GHz and 5GHz, and the height 101 and the width 102 may be, for example, 4.5mm and 24mm. It is worth noting that current antenna elements operable in 2.4GHz and 5GHz mostly have a height greater than 8mm. In other words, the antenna element 12 in FIG. 1 has the low-profile characteristic. That is, the communication device 10 has a low-profile antenna element 12, so as to be feasible for narrow-frame designs.

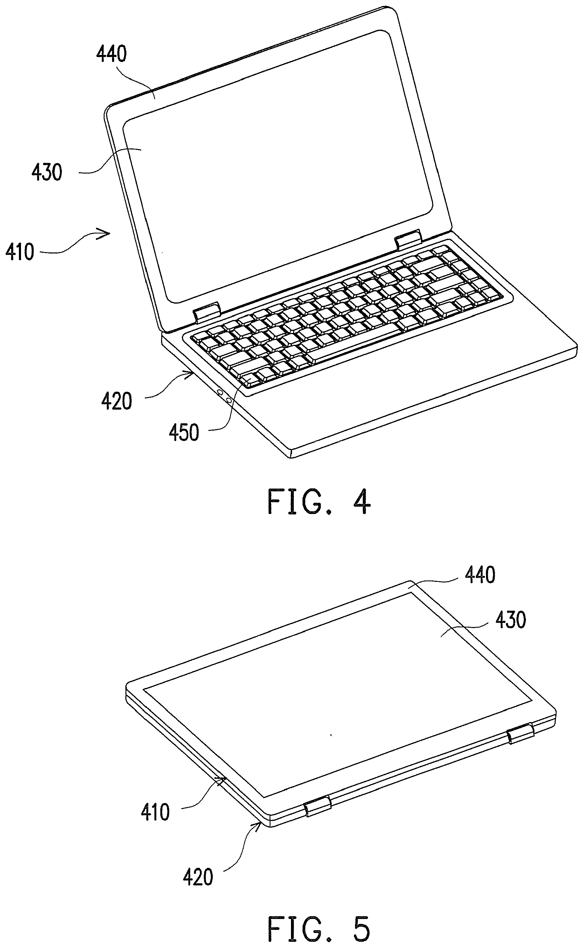

For instance, FIGs. 4 and 5 are respectively schematic diagrams of the appearance of a communication device according to an embodiment of the invention. As shown in FIGs. 4 and 5, the communication device 10 further includes a first body 410 and a second body 420, and a display 430 and a narrow frame 440 are disposed on the front surface of the first body 410, and a keyboard 450 is disposed on the front surface of the second body 420. In addition, the first body 410 may be unfolded with respect to the second body 420, so that there is an included angle between the front surface of the first body 410 and the front surface of the second body 420.

As shown in FIG. 4, when the included angle between the front surface of the first body 410 and the front surface of the second body 420 is greater than 0 but smaller than 180, the communication device 10 is in a notebook mode. On the other hand, as shown in FIG. 5, when the included angle between the front surface of the first body 410 and the front surface of the second body 420 is equal to 360, the first body 410 overlaps with the second body 420 back to back, so that the communication device 10 is in a tablet mode. Furthermore, the antenna element 12 in FIG. 1 may be disposed in the first body 410 and face the narrow frame 440 surrounding the display 430. In other words, the antenna element 12 in the communication device 10 is disposed with respect to the narrow frame 440 of the display 430. In addition, since the antenna element 12 has the low-profile characteristic, the antenna element 12 matches the design needs for the display 430 having the narrow frame 440.

It is worth noting that in the tablet mode, low-frequency operation of current antenna elements are often easily affected by external environments (for instance, metal back covers of the first body 410 and the second body 420). However, in terms of the antenna element 12 in FIG. 1, the first resonant path corresponding to the first band (for example, the low-frequency band) has the loop structure, and therefore the antenna element 12 operating in the first band (for example, the low-frequency band) is less easily disturbed by external environments. In other words, in both the notebook mode and the tablet mode, the antenna element 12 maintains good radiation characteristics, so that the communication device 10 has good communication quality.

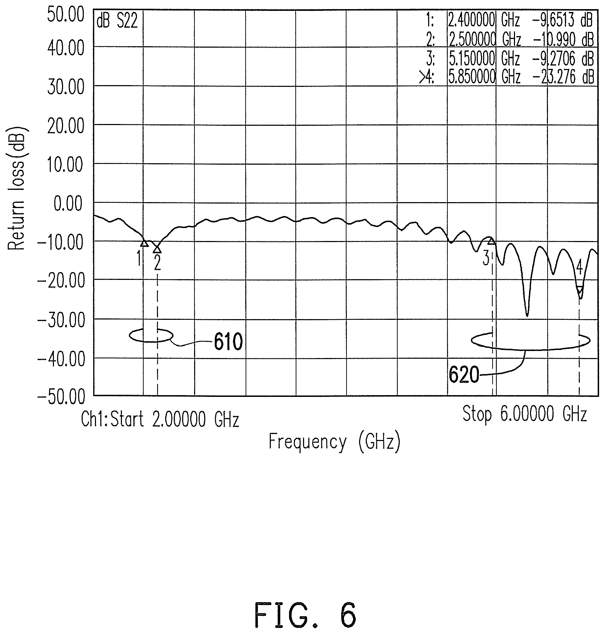

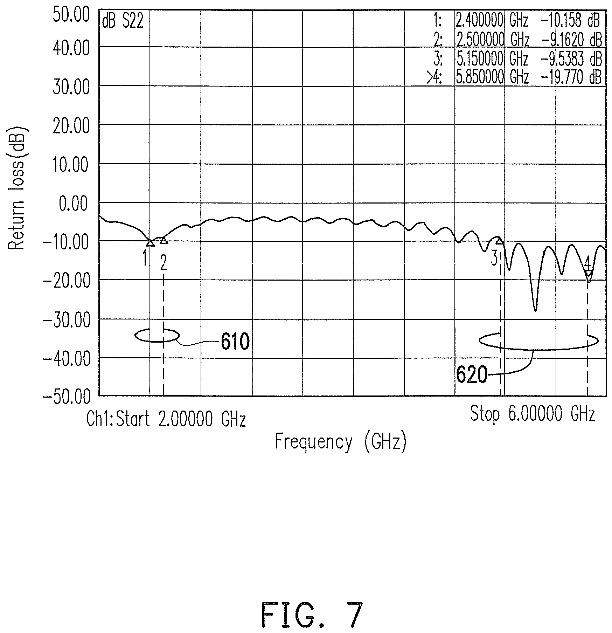

For instance, FIG. 6 is a diagram of return loss of an antenna element in the notebook mode according to an embodiment of the invention, and FIG. 7 is a diagram of return loss of an antenna element in the tablet mode according to an embodiment of the invention. As shown in FIGs. 6 and 7, the antenna element 12 is operable in a first band 610 and a second band 620. In addition, in both the notebook mode and the tablet mode, the antenna element 12 keeps return loss in the first band 610 and the second band 620 under -10dB.

In view of the above, the first portion in the first radiation portion of the invention faces the first edge of the ground plane and the second portion, and the second portion extends from the second edge of the ground plane. Thereby, the space occupied by the first radiation portion in the Y-axis direction is reduced, so that the height of the antenna element in the Y-axis direction is reduced. In addition, the current-dividing path is used in the invention to adjust the impedance of the antenna element 12 operating in the second band, so as to reduce the space occupied by the second radiation portion in the Y-axis direction, so that the height of the antenna element in the Y-axis direction is further reduced. Thereby, the antenna element in the communication device has the low-profile characteristic, so as to be feasible for narrow-frame designs.

## Claims

1. A communication device (10), comprising:
a ground plane (11), comprising a first edge (SD11) and a second edge (SD12) that are adjacent to each other; and
an antenna element (12), comprising:
a feeding portion (120), close to the first edge (SD11) of the ground plane (11);
a first radiation portion (130), forming a first resonant path (210) with the feeding portion (120) and comprising a first portion (131) and a second portion (132) that are electrically connected, wherein the first portion (131) faces the first edge (SD11) and the second portion (132), and the second portion (132) extends from the second edge (SD12);
a second radiation portion (140), forming a second resonant path (310) with the feeding portion (120), wherein the antenna element (12) is configured to operate in a first band (610) and a second band (620) through the first resonant path (210) and the second resonant path (310); and
an adjusting portion (150), electrically connected between the first portion (131) and the second portion (132), and the adjusting portion (150) and part of the first radiation portion (130) form a current-dividing path (320) configured to adjust an impedance of the antenna element (12) in the second band (620),
wherein the first portion (131) is divided into a first segment (330) and a second segment (340) based on a place where the adjusting portion (150) is disposed, the first segment (330) is electrically connected to the feeding portion (120), the second segment (340) is electrically connected to the second portion (132), and the length of the first segment (330) is twice the length of the second segment (340).

2. The communication device as claimed in claim 1, wherein the feeding portion (120) electrically connects a first end of the first portion (131) and a first end of the second radiation portion (140), a second end of the second radiation portion (140) is an open end, a first end of the second portion (132) is electrically connected to a second end of the first portion (131), and a second end of the second portion (132) is electrically connected to the second edge (SD12).

3. The communication device as claimed in claim 1, wherein the adjusting portion (150) is parallel to a part of the second portion (132).

4. The communication device as claimed in claim 3, wherein the shape of the first portion (131) is linear, and the shape of the second portion (132) is an inverted-L.

5. The communication device as claimed in claim 4, wherein the shape of the second radiation portion (140) is an inverted-L.

6. The communication device as claimed in claim 1, wherein the first resonant path (210) is a 1/2 wavelength of the lowest frequency of the first band (610).

7. The communication device as claimed in claim 1, wherein the second resonant path (310) is a 1/4 wavelength of the lowest frequency of the second band (620).

8. The communication device as claimed in claim 1, wherein the second radiation portion (140) comprises a bend, so that a part of the second radiation portion (140) is parallel to the first portion (131).

9. The communication device as claimed in claim 1, wherein the current-dividing path (320) has an inductive effect, so as to reduce a capacitive effect between the second radiation portion (140) and the ground plane (11).

## Patentansprüche

1. Kommunikationsvorrichtung (10), umfassend:
eine Horizontalebene (11), die eine erste Kante (SD11) und eine benachbarte zweite Kante (SD12) umfasst;
und ein Antennenelement (12), umfassend:
einen nahe an der ersten Kante (SD11) der Horizontalebene (11) angeordneten Einspeiseabschnitt (120);
einen ersten Strahlungsabschnitt (130), der mit dem Einspeiseabschnitt (120) einen ersten Resonanzpfad (210) bildet und einen ersten Abschnitt (131) und einen damit elektrisch verbundenen zweiten Abschnitt (132) aufweist,
wobei der erste Abschnitt (131) der ersten Kante (SD 11) und dem zweiten Abschnitt (132) zugewandt ist und der zweite Abschnitt (132) sich von der zweiten Kante (SD12) weg erstreckt;
einen zweiten Strahlungsabschnitt (140), der mit dem Einspeiseabschnitt (120) einen zweiten Resonanzpfad (310) bildet,
wobei das Antennenelement (12) dafür ausgelegt ist, durch den ersten Resonanzpfad (210) und den zweiten Resonanzpfad (310) in einer ersten Bandbreite (610) und einer zweiten Bandbreite (620) zu arbeiten;
und einen mit dem ersten Abschnitt (131) und dem zweiten Abschnitt (132) elektrisch verbundenen Einstellabschnitt (150), wobei der Einstellabschnitt (150) und ein Teil des ersten Strahlungsabschnitts (130) einen Stromteilerpfad (320) bilden, der dafür ausgelegt ist, die Impedanz des Antennenelements (12) in der zweiten Bandbreite (620) einzustellen,
wobei der erste Abschnitt (131) je nach Platzierung des Einstellabschnitts (150) in ein erstes Segment (330) und ein zweites Segment (340) unterteilt ist,
wobei das erste Segment (330) mit dem Einspeiseabschnitt (120) elektrisch verbunden ist, das zweite Segment (340) mit dem zweiten Abschnitt (132) elektrisch verbunden ist und das erste Segment (330) doppelt so lang ist wie das zweite Segment (340).

2. Kommunikationsvorrichtung gemäß Anspruch 1,
wobei der Einspeiseabschnitt (120) ein erstes Ende des ersten Abschnitts (131) und ein erstes Ende des zweiten Strahlungsabschnitts (140) elektrisch verbindet, ein zweites Ende des zweiten Strahlungsabschnitts (140) ein offenes Ende aufweist, ein erstes Ende des zweiten Abschnitts (132) mit einem zweiten Ende des ersten Abschnitts (131) elektrisch verbunden ist und ein zweites Ende des zweiten Abschnitts (132) mit der zweiten Kante (SD12) elektrisch verbunden ist.

3. Kommunikationsvorrichtung gemäß Anspruch 1,
wobei der Einstellabschnitt (150) parallel zu einem Teil des zweiten Abschnitts (132) verläuft.

4. Kommunikationsvorrichtung gemäß Anspruch 3,
wobei der erste Abschnitt (131) linear geformt ist und der zweite Abschnitt (132) die Form eines umgekehrten L aufweist.

5. Kommunikationsvorrichtung gemäß Anspruch 4,
wobei der zweite Strahlungsabschnitt (140) die Form eines umgekehrten L aufweist.

6. Kommunikationsvorrichtung gemäß Anspruch 1,
wobei der erste Resonanzpfad (210) die halbe Wellenlänge der niedrigsten Frequenz der ersten Bandbreite (610) aufweist.

7. Kommunikationsvorrichtung gemäß Anspruch 1,
wobei der zweite Resonanzpfad (310) ein Viertel der Wellenlänge der niedrigsten Frequenz der zweiten Bandbreite (620) aufweist.

8. Kommunikationsvorrichtung gemäß Anspruch 1,
wobei der zweite Strahlungsabschnitt (140) eine Biegung aufweist, so dass ein Teil des zweiten Strahlungsabschnitts (140) parallel zum ersten Abschnitt (131) verläuft.

9. Kommunikationsvorrichtung gemäß Anspruch 1,
wobei der Stromteilerpfad (320) eine induktive Wirkung hat, um den kapazitiven Effekt zwischen dem zweiten Strahlungsabschnitt (140) und der Horizontalebene (11) zu reduzieren.

## Revendications

1. Un dispositif de communication (10), comprenant :
un plan de masse (11), comprenant un premier bord (SD11) et un second bord (SD12) qui sont adjacents l'un à l'autre ;
et un élément d'antenne (12), comprenant :
une partie d'alimentation (120), près du premier bord (SD11) du plan de masse (11) ;
une première partie de rayonnement (130), formant un premier chemin résonant (210) avec la partie d'alimentation (120) et comprenant une première partie (131) et une seconde partie (132) qui sont connectées électriquement,
dans lequel la première partie (131) se trouve en regard du premier bord (SD 11) et de la seconde partie (132) et la seconde partie (132) s'étend à partir du second bord (SD12) ;
une seconde partie de rayonnement (140), formant un second chemin résonant (310) avec la partie d'alimentation (120),
dans lequel l'élément d'antenne (12) est configuré pour fonctionner dans une première bande (610) et une seconde bande (620) par l'intermédiaire du premier chemin résonant (210) et du second chemin résonant (310) ;
et une partie de réglage (150), connectée électriquement entre la première partie (131) et la seconde partie (132) et la partie de réglage (150) et une partie de la première partie de rayonnement (130) forme un chemin diviseur de courant (320) configuré pour régler une impédance de l'antenne de l'élément d'antenne (12) dans la seconde bande (620),
dans lequel la première partie (131) est divisée en un premier segment (330) et un second segment (340) en fonction d'un emplacement où la partie de réglage (150) est située,
le premier segment (330) est connecté électriquement à la partie d'alimentation (120).
le second segment (340) est connecté électriquement à la seconde partie (132) et la longueur du premier segment (330) est le double de la longueur du second segment (340).

2. Le dispositif de communication tel que revendiqué dans la revendication 1,
dans lequel la partie d'alimentation (120) connecte électriquement une première extrémité de la première partie (131) et une première extrémité de la seconde partie de rayonnement (140),
une seconde extrémité de la seconde partie de rayonnement (140) est une extrémité ouverte,
une première extrémité de la seconde partie (132) est connectée électriquement à une seconde extrémité de la première partie (131),
et une seconde extrémité de la deuxième partie (132) est connectée électriquement au second bord (SD12).

3. Le dispositif de communication tel que revendiqué dans la revendication 1,
dans lequel la partie de réglage (150) est parallèle à la partie de la seconde partie (132).

4. Le dispositif de communication tel que revendiqué dans la revendication 3,
dans lequel la forme de la première partie (131) est linéaire et la forme de la seconde partie (132) est un L inversé.

5. Le dispositif de communication tel que revendiqué dans la revendication 4,
dans lequel la forme de la seconde partie de rayonnement (140) est un L inversé.

6. Le dispositif de communication tel que revendiqué dans la revendication 1,
dans lequel le premier chemin résonant (210) est une 1/2 longueur d'onde de la fréquence la plus basse de la première bande (610).

7. Le dispositif de communication tel que revendiqué dans la revendication 1,
dans lequel le second chemin résonant (310) est un 1/4 de longueur d'onde de la fréquence la plus basse de la seconde bande (620).

8. Le dispositif de communication tel que revendiqué dans la revendication 1,
dans lequel la seconde partie de rayonnement (140) comprend un coude, de manière à ce qu'une partie de la seconde partie de rayonnement (140) soit parallèle à la première partie (131).

9. Le dispositif de communication tel que revendiqué dans la revendication 1,
dans lequel le chemin diviseur de courant (320) présente un effet inductif, de manière à réduire un effet capacitif entre la seconde partie de rayonnement (140) et le plan de masse (11).
